# EUROPEAN PATENT APPLICATION

(11) **EP 0 920 800 A1**
(43) Date of publication of application: **09.06.1999**
(21) Application number: 98203981.0
(22) Date of filing: 25.11.1998
(51) Int. Cl.: A01G 9/22

(54) **Carrier element for a screen in a greenhouse**

(30) Priority: 05.12.1997 NL 1007700
(71) Applicant: Peter Dekker Installaties B.V., 2670 AE Naaldwijk (NL)
(72) Inventor: Dekker, Peter, 2671 HN Naaldwijk (NL); Vahl, Harald, Linschoten (NL)
(74) Representative: Vollebregt, Cornelis Jacobus, Ir.

(57) **Abstract**

The invention relates to a carrier element (9) for moving a screen (5) in a greenhouse (1). The carrier element (9) can be mounted on a pull rope (7) and be connected to a screen (5), wherein the construction is such that when a predetermined force being exerted on the screen (5) is exceeded, the pull rope (7) will slip with respect to the carrier element (9). The carrier element (9) comprises two blocks (10,11), between which the pull rope (7) can be retained rectilinearly. The blocks co-operate (10,11) with a spring (23), by means of which the blocks (10,11) are clamped down on the pull rope (7).

## Description

The invention relates to a carrier element for moving a screen in a greenhouse, wherein the carrier element can be mounted on a pull rope and can be connected to the screen, which is to be carried along by means of the carrier element when the pull rope is being moved in its longitudinal direction, and wherein the construction is such that when a predetermined force being exerted on the screen is exceeded, the pull rope will slip with respect to the carrier element.

In greenhouses screens are frequently used, which screens can be extended partially or entirely, depending on the weather conditions, for example for blocking the sun's radiation. The screens are thereby coupled to pull ropes, which can be moved in their longitudinal direction for the purpose of closing or opening the screens.

In many cases, several screens disposed one behind the other are coupled to a pull rope. It is possible thereby that one screen is shorter than another. In such a case, the shorter screen is coupled to a pull rope by means of a carrier element, which will slip with respect to the pull rope when a predetermined force on said screen is exceeded, so that said shorter screen is not carried along by the pull rope any further, whilst the longer screens can still be moved by the pull rope. This can take place both during the opening and during the closing of the screens.

A known carrier element which is used thereby is provided with three rollers, along which the pull rope is guided in a curved path, to which end the middle one of the three rollers can be pressed further or less far between the two outer rollers by means of an adjusting screw. When such a carrier element is used, the rope is twisted, which in practice causes damage to the rope after some time, as a result of which the intended slipping of the carrier element with respect to the pull rope is no longer possible. Another drawback is the fact that there is a great risk that the adjustment of the middle roller with respect to the two outer rollers by means of the adjusting screw will take place in such a manner that the force being exerted on the pull rope will be excessive or rather insufficient, which is also detrimental to a correct operation of the carrier element.

Dutch patent application No. 8403306 discloses a carrier element wherein the pull rope is guided in a curve along three fixedly disposed guide elements. The pull rope of said construction is twisted in a similar manner as in the above-described known device, with all the consequent drawbacks.

The objective of the invention is to provide a carrier element of the above kind, wherein the aforementioned drawbacks can be avoided.

According to the invention this objective can be accomplished in that the carrier element comprises two blocks, between which the pull rope can be retained rectilinearly, wherein a first block is designed to be fixed with respect to the screen and wherein the carrier element is provided with a spring, which presses the second block towards the first block in a direction transversely to the longitudinal direction of the pull rope.

When using the construction according to the invention, the pull rope can be guided rectilinearly through the carrier element, whereby the friction forces which are generated by the clamping of the pull rope between the two blocks will be sufficient for carrying along a screen, whilst the carrier element can slip with respect to the pull rope when the screen has reached a final position and the pulling force being exerted on the carrier element exceeds a predetermined value, without the pull rope being distorted in a direction transversely to its longitudinal direction thereby. The pressing of the two blocks against the pull rope is effected exclusively by the spring, which spring may be designed to exert an intended clamping force on the pull rope via the blocks, which clamping force cannot be varied in an adverse manner due to incorrect mounting. It has become apparent that the wear that may occur at the location of the contact surfaces between the pull rope and the two blocks during operation is so small that the force being exerted will hardly change during a long life, so that a correct operation of the carrier element will be ensured at all times.

In a greenhouse which is provided with several screens disposed one behind the other, which are coupled to one or more pull ropes by means of carriers, all screens can be efficiently coupled to the pull rope(s) by means of at least one carrier element of the above kind. In that case it will be possible upon opening and closing of the screens to keep the pull rope(s) moving until all carrier elements slip with respect to the pull rope(s), so that it can be ensured that all screens will be opened or closed completely.

The invention will be explained in more detail hereafter by means of a few embodiments which are shown in the accompanying figures.
Figure 1 is a schematic, perspective view of a greenhouse provided with a few screens.
Figure 2 is an exploded, perspective view, showing parts of a carrier element according to the invention.
Figure 3 is a side view of a carrier element mounted on a pull rope, with a cloth section attached thereto.
Figure 4 is a side view of Figure 3.
Figure 5 is a plan view of Figure 3, wherein the cloth section is not shown.
Figure 6 is a view corresponding with Figure 3, showing a different cloth section attached to the carrier element.
Figure 7 is a side view of Figure 6.
Figure 8 is a side view of another possible embodiment of a carrier element according to the invention.
Figure 9 is a side view of Figure 8.
Figure 10 is a side view of another possible embodiment of a carrier element according to the invention.
Figure 11 is a cross-sectional view of the carrier element as shown in Figure 10.
Figure 12 is a bottom view of the carrier element as shown in Figure 10.
Figure 13 is a longitudinal sectional view of the carrier element as shown in Figure 10.

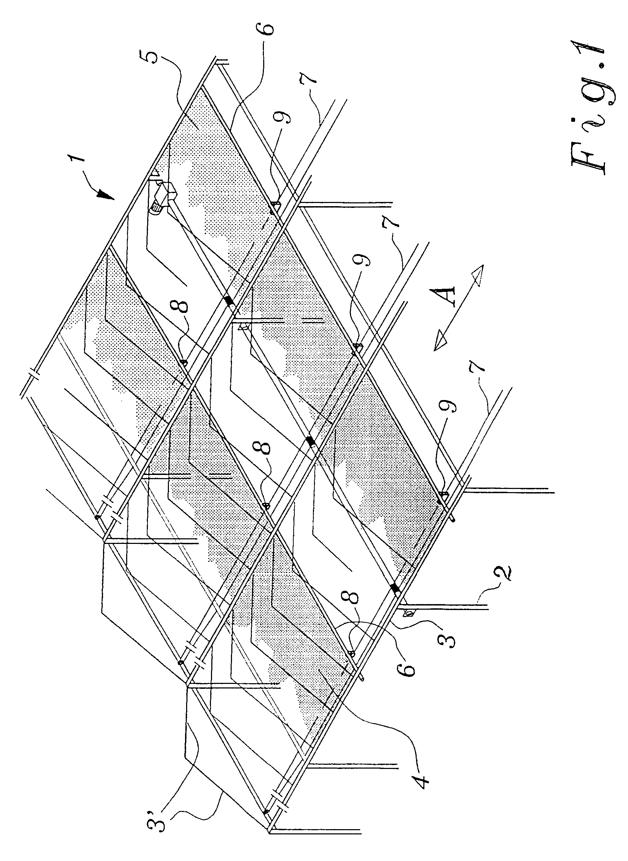

Figure 1 schematically shows part of a greenhouse 1, which is provided with columns 2, which support girders 3 at their upper ends. Rooftops 4 are mounted on said girders.

Screens 4 and 5 are provided in the interior of the greenhouse, which screens can be opened and closed in horizontal direction. To this end, pull ropes 7 are connected to cloth beams 6 attached to the ends of the screens, which pull ropes can be moved in their longitudinal direction by driving means.

The cloth beam 6 of screen 4 is fixedly connected to the pull ropes by means of fasteners 8.

In connection with the construction of the greenhouse, screen 5 is shorter than screen 4, seen in the intended direction of movement of the screens as indicated by arrow A. In order to make it possible still to open and close screen 4 completely by means of pull ropes 7, whilst also screen 5 can be moved over the desired distance for opening and closing said screen, screen 5 is connected to the pull ropes by means of carrier elements 9, which enable the pull ropes 7 to slip with respect to the carrier elements 9, both during opening and during closing of screen 5, for example when the cloth beam 6 of screen 5 makes contact with a stop or the like.

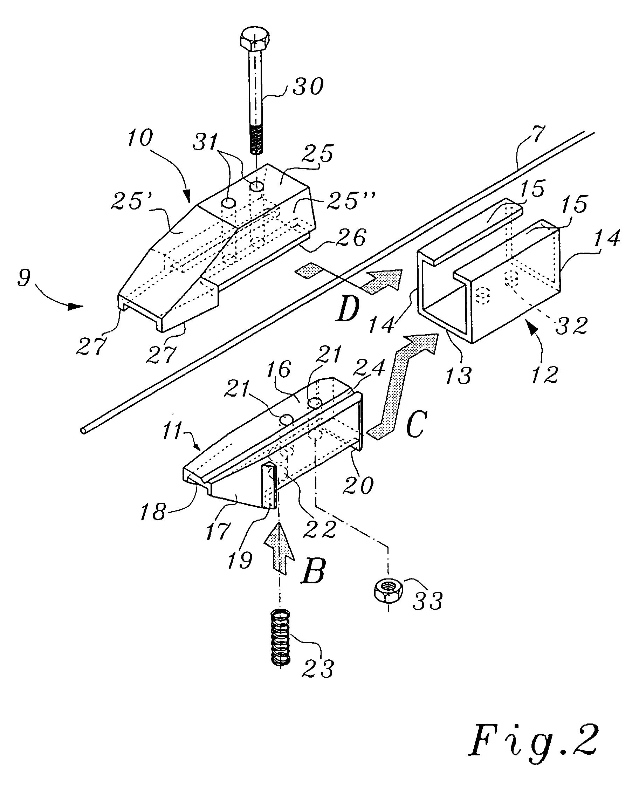

One embodiment of such a carrier element 9 is shown in Figures 2 - 5.

As is apparent in particular from Figure 2, a carrier element comprises two blocks 10 and 11, which will preferably be made of a suitable plastic material, as well as a supporting element 12. Supporting element 12 is a C-shaped (seen in sectional view) section, which comprises a base 13, two parallel side walls 14 extending upward from base 13, and edges 15 joining the upper ends of side walls 14, which edges are bent over towards each other.

Block 11 comprises a rectangular (seen in sectional view) part 16, which is extended at one end with two wings 17 extending parallel to each other, which wings are interconnected at their upper ends by a web 18, whose upper surface is in line with the upper surface of part 16 of block 11.

Wings 17 project slightly under block 11 near their ends which join part 16. Furthermore, projecting noses 19 are provided on the sides of the wings, near the place where wings 17 join part 16 of block 11.

At its ends remote from wings 17, block 11 furthermore comprises a nose 20, which projects under part 16 of block 11. Two through bores 21 are formed in part 16 of block 11, as well as a blind bore 22, which extends into block 11 from the bottom surface over part of the height of block 11 as seen in figure 2. Said blind hole 22 is provided for the purpose of accommodating a compression spring 23, which can be inserted into blind hole 22, as indicated by arrow B.

Furthermore, a groove 24 of triangular section extending in the longitudinal direction of block 11 is formed in the upper surface of block 11.

After spring 23 has been inserted into the blind hole 22 of block 11, said block 11 can be moved into the space bounded by parts 13-14 of supporting element 12, as is indicated by arrow C, in such a manner that the noses 19 will abut against the left-hand end, seen in Figure 2, of wall parts 14, and nose 20 will be positioned near the right-hand end, seen in Figure 2, of base 13 of supporting element 12. Spring 23 will then tend to press block 11 against the undersides of the bent-over edges 15.

Block 11 is bounded at its upper side by a horizontal upper surface 25 along part of its length, which upper surface blends into a downwardly sloping upper surface 25', whose width gradually increases, as will be apparent in particular from Figure 5. Downwardly sloping side walls 25'', whose bottom edges are in line with the widest part of upper surface 25', as will be apparent from Figure 5, join the upper surface 25 and the upper surface 25' contiguous thereto.

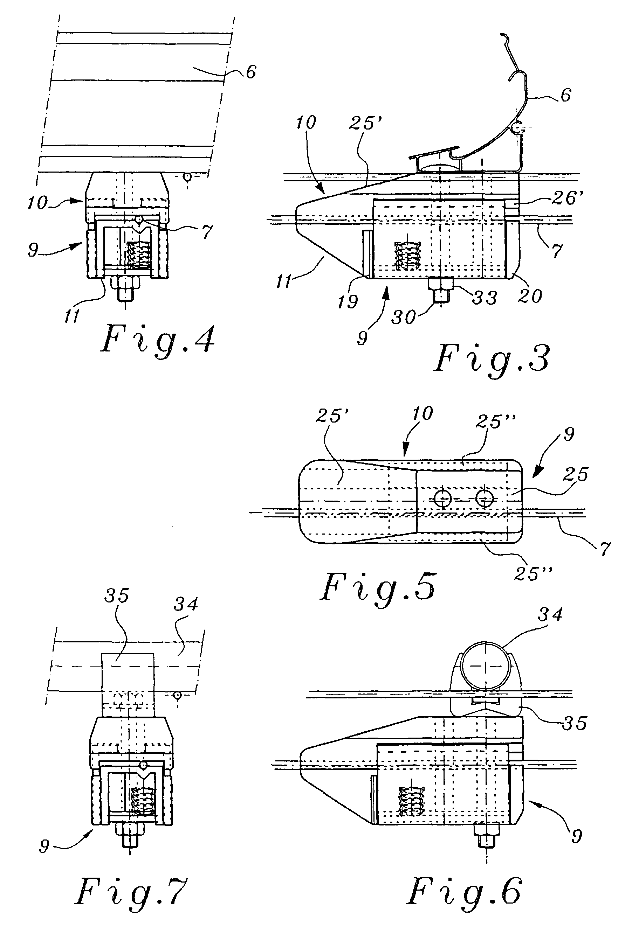

Part 26 of block 10, which is positioned lower than the lower boundary edges of side walls 25'', is narrower than the part of block 10 that is positioned thereabove, and said part 26 of block 10, which only extends along part of the length of block 10, is provided with longitudinal grooves 26' (Figure 3).

Downwardly extending wings 27, which project slightly beyond the underside of part 26 of block 10, are provided on the part of block 10 that projects beyond the end of part 26, which part is bounded by sloping upper surface 25'.

After block 11 has been placed into supporting element 12 in the above-described manner, supporting element 12 and block 11 can be pressed against the underside of pull rope 7, in such a manner that pull rope 7 is positioned in slot 24. Block 11 can be pressed down into supporting element 12 against the spring force of spring 23 thereby, after which block 10 can be slid into the supporting element, as is indicated by means of arrow D in Figure 2. When block 10 is being slid into supporting element 12, the bent-over edges 15 will slide into the grooves 26' formed in said block, until the ends of wings 27 directed towards grooves 26' abut against the left-hand end of supporting element 12, seen in Figure 2. In this position, lower block 11 is locked against movement with respect to the supporting element by means of noses 19 and 20, which abut against the ends of supporting element 12. The outer sides of the upright wall parts 14 of supporting element 12 are furthermore coplanar with the outer sides of the ends of wings 27 abutting against said wall parts, and with the outer sides of the ends of sloping lateral surfaces 25, so that supporting element 12 does not comprise any impeding parts projecting from the blocks, so that the screen cannot catch on the carrier element.

In the above-described mounting position, carrier element 9 is already attached to the pull rope 7 in such a manner that it is not necessary to hold said carrier element 9 by hand, for example.

Subsequently, a carrier element 9 mounted on a pull rope 7 in this manner can be attached to a cloth beam 6 by means of a bolt 30, which can be passed through a hole formed in the cloth beam 6 for this purpose, through one of the holes 31 formed in block 10 and one of the holes 21 formed in block 11, and also through one of the holes 32 formed in base 13 of supporting element 12, and be secured by means of a nut 33.

Since the bent-over edges 15 of supporting element 12 are accommodated in the grooves 26' formed in block 10, block 10 is prevented from moving in a direction transversely to the longitudinal direction of pull rope 7 with respect to pull rope 7, at least substantially so. Block 11, on the other hand, can move with respect to supporting element 12 in a direction perpendicularly to the longitudinal direction of pull rope 7. Consequently, block 11 will be pressed against the pull rope 7, which is retained between the two blocks 10 and 11, under the influence of spring 23. Said spring is thereby designed to exert a force such that the clamping force being exerted on rope 7 will be large enough to carry along screen 5 until the cloth beam 6, for example, strikes a stop or the like, whereupon pull rope 7 can slip between the two blocks 10 and 11. The pull rope will not be twisted thereby, however. In practice it has become apparent that the wear caused by slipping will be negligible if the material for blocks 10 and 11 is suitably selected, so that the correct clamping force will be exerted on rope 7 by means of spring 23 at all times. Said clamping force cannot be influenced during mounting, since the clamping force is determined by the spring design and by the length of the blind hole 20, thus obviating the need for further adjustment during mounting of the carrier element on pull rope 7.

Damage to the screen is prevented as a result of the wedge shape of the end of the carrier element that projects in the direction of the screen, to the left in Figure 3, with respect to the cloth beam 6, and as a result of the fact that supporting element 12 is screened by blocks 10 and 11.

Figures 6 and 7 essentially correspond with Figures 3 and 4. As is apparent from Figures 6 and 7, however, the carrier element can be used with various types of cloth beams. The fact is that in contrast to Figures 3 and 4, wherein a profiled cloth beam 6 is used, a round cloth beam 34 is used in Figures 6 and 7, which is accommodated in a clamping bracket 35 which is secured on the carrier element by means of bolt 30.

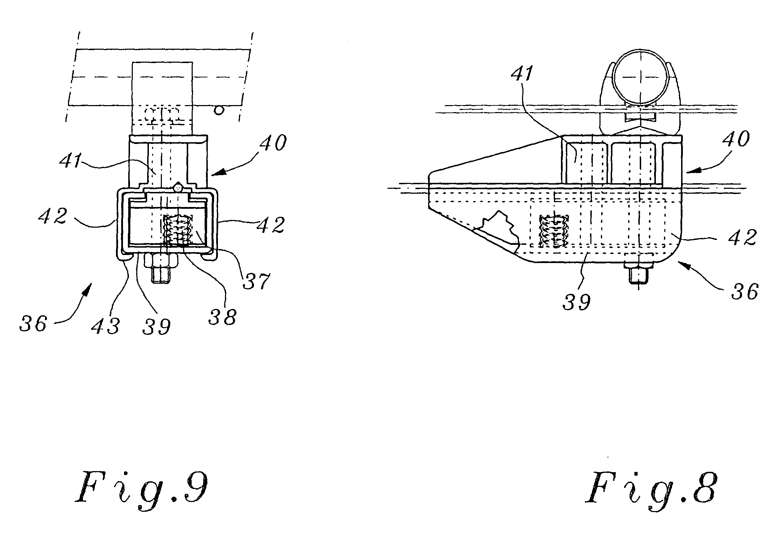

The construction of lower block 37, the spring accommodated therein as well as the supporting element 39 of the carrier element 36 shown in Figures 8 and 9 essentially corresponds with that of block 11 and supporting element 12 of the above-described carrier element 9. The upper block 40 of said carrier element, however, is provided with a part 41 which is supported on the upper side of supporting element 39, which part 41 is provided near its longitudinal edges with two wings 42 extending along the sides of supporting element 39, whose lower ends 43, which are bent over towards each other, engage under supporting element 39. Thus, an embodiment is obtained wherein the supporting element and the lower block are entirely screened by wings 42 of upper block 40.

It will also be conceivable, however, to leave out supporting element 39 in the embodiment according to Figures 8 and 9, whereby wings 42 of upper block 40 may extend right along the sides of lower block 37. In that case it will for example be possible to mount an elongated leaf spring between the underside of the lower block and the facing ends 43 of the wings, which leaf spring will be supported with its longitudinal edges on the bent-over edges 43, and which is bent in its longitudinal direction or curvilinear in unstressed condition, such that said leaf spring, if it is clamped down between the bent-over edges 43 and the underside of block 37, will extend an upward force, seen in Figure 9, on block 37 in the direction of the upper block 40, which is connected to the screen.

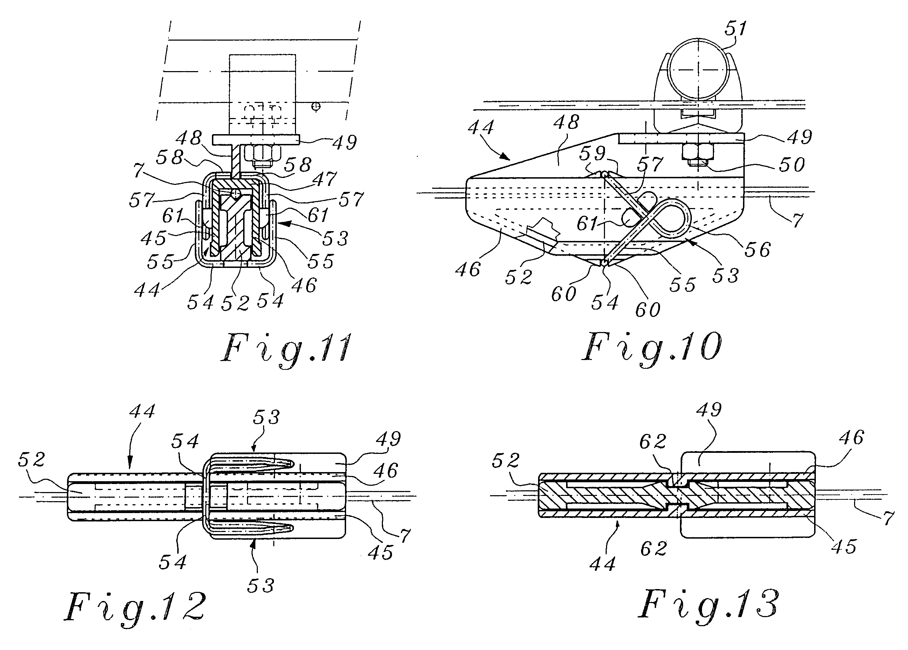

In the embodiment which is shown in Figures 10 - 12, an upper block 44 has a U-shaped cross-section, and it is provided with two wings 45 and 46 extending parallel to each other, which are interconnected near their upper ends by means of a connecting piece 47.

A plate-shaped part 49 is connected to upper block 44 by means of a web 48 extending parallel to wings 45 and 46, and being in one piece with the upper block 44, which plate-shaped part 49 can be secured, by means of a bolt 50, on a cloth tube 51 or the like corresponding with the cloth tube 34 as shown in Figures 6 and 7 so as to connect the upper block to the screen to be moved.

Pull rope 7 abuts against the underside of connecting piece 47 between wings 45 and 46, whilst lower block 52 is at least largely accommodated in the space between wings 44 and 46.

In the assembled condition of the carrier element as shown in Figures 10 - 13, the two blocks 45 and 52 are held together and pressed together in a direction perpendicularly to the longitudinal direction of the pull rope 7 by means of two springs 53. Said springs 53, which are bent from spring steel wire, each comprise a part 54 extending along the underside of lower block 52, which crosses pull rope 7 perpendicularly. A leg 55, which slopes upwards towards pull rope 7, seen in Figure 10, joins the end of part 54 that extends beyond wings 45 and 46, which leg 55 is connected, via a curved part 56, to a leg 57 sloping upwards in the opposite direction. Legs 57 are provided with bent-over ends 58, which are supported on the upper side of connecting piece 47 of upper block 44. Said bent-over ends 58 are thereby positioned between noses 59 formed on top of the central part 47 of upper block 44.

Lower block 52, which is substantially triangular, seen in side view, is provided with two projecting noses 60, between which parts 54 of springs 53 are positioned. As is shown in Figure 10, legs 57 may furthermore be retained between cams 61 formed on the outer sides of wings 45 and 46.

When the carrier element is to be mounted, upper block 44 can be placed on pull rope 7 and springs 53 can be suspended from said upper block by means of the bent-over ends 58. It is also possible to connect the springs 53 to the upper block in advance, for example at the factory, and to make this combination available for mounting on the pull rope. Then the lower block 52 can be moved parallel to pull rope 7, whereby the pull rope will be positioned in the V-shaped (seen in sectional view) groove in the upper surface of lower block 52. During said insertion of lower block 52 into upper block 44, the parts 54 of springs 53 will slide along the sloping bottom surface of lower block 52, and at a certain point they will snap into the recess between cams 60. It will be apparent that the two blocks 44 and 52 will then be held together by means of springs 53 and also be pressed together by springs 53 for the purpose of clamping rope 7 between the two blocks.

As is furthermore shown in Figure 13, upper block 44 and lower block 52 may furthermore be secured against movement in the longitudinal direction of pull rope 7 when occupying the appropriate position of use with respect to each other, by providing projecting cams 62 on the inner side of wings 45 and 46, which cams are capable of engaging into recesses which are present between projecting noses 62 formed on the sides of lower block 52. When lower block 52 is being slid into the space between wings 45 and 46 of lower block 44, said wings will be forced slightly apart when cams 62 come into contact with projections 61, which can be realised in a simple manner if upper block 44 is made of a suitable plastic material. After cams 61 have passed noses 62, wings 45 and 46 will spring back to the position which is shown in Figure 13.

The two springs 53 may form one unit by having the parts 54 of the two springs join each other.

## Claims

1. A carrier element for moving a screen in a greenhouse, wherein the carrier element can be mounted on a pull rope and be connected to a screen, which is to be carried along by means of the carrier element when the pull rope is being moved in its longitudinal direction, and wherein the construction is such that when a predetermined force being exerted on the screen is exceeded, the pull rope will slip with respect to the carrier element, characterized in that the carrier element comprises two blocks, between which the pull rope can be retained rectilinearly, wherein a first block is designed to be fixed with respect to the screen and wherein the carrier element is provided with a spring, which presses the second block towards the first block in a direction transversely to the longitudinal direction of the pull rope.

2. A carrier element according to claim 1, characterized in that said blocks are supported by a supporting element, in such a manner that in the mounted position of the carrier element on the pull rope a first block will be locked against movement in a direction perpendicularly to the longitudinal direction of the pull rope with respect to said supporting element, whilst the second block is pushed in the direction of the first block by means of a spring provided between said second block and said supporting element.

3. A carrier element according to claim 1 or 2, characterized in that said supporting element is a substantially C-shaped (seen in sectional view) section, in which said second block is accommodated.

4. A carrier element according to any one of the preceding claims, characterized in that said second block is provided with stops which co-operate with ends of said supporting element, which stops prevent movement of the second block in the longitudinal direction of the pull rope with respect to said supporting element.

5. A carrier element according to any one of the preceding claims, characterized in that said spring is accommodated in a blind bore provided in said second block.

6. A carrier element according to any one of the preceding claims, characterized in that said first block is provided with grooves, in which the facing ends of the C-shaped (seen in sectional view) supporting element, are accommodated.

7. A carrier element according to any one of the preceding claims, characterized in that a part of the first block positioned above the supporting element extends as far as the sides of said supporting element.

8. A carrier element according to any one of the preceding claims, characterized in that said first block screens said supporting element near one end, at least over part of the height of said supporting element.

9. A carrier element according to any one of the preceding claims, characterized in that parts of the blocks positioned one on top of the other, which project from the supporting element at one end thereof, are wedge-shaped.

10. A carrier element according to any one of the preceding claims, characterized in that said first block is provided with wings extending along the outer sides of the supporting element, wherein bent-over parts of said wings extend under a base part of said supporting element.

11. A carrier element according to claim 1, characterized in that said first block is provided with wings extending along the outer sides of said second block, wherein bent-over parts of said wings extend under said second block, whilst a leaf spring is provided between the bent-over ends of the wings of said first block and the side of the second block that is positioned opposite thereto.

12. A carrier element according to claim 1, characterized in that said spring comprises two parts, one of which abuts with pre-tension against said first block, and the other abuts with pre-tension against said second block, wherein the shape of the spring is such that the two parts of the spring that abut against said blocks tend to move towards each other so as to press the blocks together.

13. A carrier element according to claim 12, characterized in that one part of said spring abuts against an outer surface of the first block remote from the second block, and that one part of the spring abuts against an outer surface of the second block remote from the first block, whilst the two parts of the spring are interconnected by at least one connecting piece present beside the blocks, which connecting piece is built up of two legs including an angle with each other, which legs are interconnected by a curved connecting part.

14. A carrier element according to any one of the claims 11 - 13, characterized in that the lower block is positioned between two parallel wings of the first block.

15. A carrier element according to claim 13 or 14, characterized in that two springs are provided, wherein the two blocks are positioned between the connecting pieces of the springs.

16. A carrier element according to claim 15, characterized in that the two springs form one unit.

17. A carrier element according to any one of the preceding claims 12 - 14, characterized in that the lower block has a substantially triangular shape, seen in a direction perpendicularly to the longitudinal direction of the pull rope.

18. A carrier element according to any one of the preceding claims, characterized in that a V-shaped groove for said pull rope is formed in one of said blocks.

19. A carrier element according to any one of the preceding claims, characterized in that a bolt is passed through the two blocks, which bolt can also be used for attaching the carrier element to a screen.

20. A method for opening and/or closing several screens disposed one behind the other in a greenhouse, wherein the screens are coupled to one or more longitudinally movable pull ropes by means of carrier elements, characterized in that when said screens are being opened and/or closed, said pull rope(s) is (are) moved until the pull rope(s) slip(s) with respect to all carrier elements.

21. A greenhouse provided with several screens disposed one behind the other, which screens are each coupled by means of carrier elements to one or more pull ropes, which are movable in their longitudinal direction for opening and/or closing said screens, characterized in that each carrier element is a carrier element according to any one of the preceding claims 1 - 19.
